# EUROPÄISCHE PATENTANMELDUNG

(11) **EP 2 098 836 A2**
(43) Veröffentlichungstag der Anmeldung: **09.09.2009**
(21) Anmeldenummer: 09450030.3
(22) Anmeldetag: 09.02.2009
(51) Int. Cl.: G01F 15/18

(54) **Anordnung zum Prüfen von Hydranten**

(30) Priorität: 03.03.2008 AT 3402008
(71) Anmelder: Taferner, Marko, 9300 St. Veit/Glan (AT)
(72) Erfinder: Taferner, Marko, 9300 St. Veit/Glan (AT)
(74) Vertreter: Beer, Manfred

(57) **Zusammenfassung**

Um die Parameter eines für die Wasserabgabe dienenden Hydranten zu erfassen, wird mit Hilfe von Messgeräten (9, 11) wenigstens der Ruhedruck (Druck im Wasser ohne Entnahme von Wasser aus dem Hydranten), der Fließdruck (Druck im aus dem Hydranten ausfließenden Wasser) und die Leistungsfähigkeit des Hydranten (maximal abgebbare Wassermenge je Zeiteinheit) erfasst. Hierzu sind Messgeräte (9, 11) vorgesehen, die in einer in Strömungsrichtung (Pfeil 17) schräg ansteigenden Rohrleitung (5, 7, 13) aus starren Rohren vorgesehen sind, wobei einströmseitig mit Abstand vor dem Mengenzähler (11) ein Drucksensor (9) und in Strömungsrichtung gesehen nach dem Zähler (11) im starren Rohr ein Ventil (15) für die Druckregulierung vorgesehen sind. Durch die starren Rohrleitungen (5, 7, 13) vor und nach dem Zähler (11) ergeben sich Beruhigungsstrecken, so dass reproduzierbare Werte für die Parameter des Hydranten erfasst werden können.

## Beschreibung

Die Erfindung betrifft eine Anordnung zum Prüfen von Hydranten mit den Merkmalen des einleitenden Teils von Anspruch 1.

Ein Verfahren und eine Anordnung zum Prüfen von Hydranten sind aus der AT 008 892 U1 bekannt.

Die aus der AT 008 892 U1 bekannte Vorrichtung dient dazu, die Parameter eines für die Wasserentnahme bestimmten Hydranten zu erfassen. Bei der bekannten Anordnung wird mit Hilfe von Messgeräten wenigstens der Ruhedruck (Druck im Wasser ohne Entnahme von Wasser aus dem Hydranten), der Fließdruck (Druck im aus dem Hydranten ausfließenden Wasser), und die Leistungsfähigkeit des Hydranten (maximal abgebbare Wassermenge je Zeiteinheit) erfasst. Zusätzlich können weitere Daten des Hydranten, wie dessen Type, dessen geografische Lage, beispielsweise in Form von GPS-Daten, sowie der Zustand des Hydranten erfasst werden. Überdies besteht die Möglichkeit, die Kraft, die nötig ist, um den Hydranten zu öffnen bzw. zu schließen, zu erfassen.

Die bekannte Vorrichtung arbeitet an sich zufriedenstellend, es hat sich jedoch herausgestellt, dass in bestimmten Fällen die bei der bekannten Anordnung durch die Verbindung der Messgeräte mit dem Hydranten mit Hilfe eines flexiblen Messschlauchs zu ungenauen und fehlerhaften Messungsergebnissen Anlass gibt, wenn in dem Messschlauch Turbulenzen auftreten. Überdies hat sich gezeigt, dass in manchen Fällen nur mäßig gut reproduzierbare Werte für die Parameter der für die Wasserentnahme bestimmten Hydranten erhalten werden.

Die GB-A-612,766 zeigt eine Vorrichtung zum Prüfen von Hydranten, die in einem lotrecht auf dem Hydranten montierten Rohr eine Anschlussstelle für eine Druckmessvorrichtung und ein Ventil aufweist. An das obere, um 90° umgebogene Ende des Rohres kann ein Durchflussmengenmessgerät angeschlossen werden. Da bei der aus der GB-A-612,766 bekannten Vorrichtung die Durchflussmengenmessvorrichtung nach einer 90° Umlenkung des Rohres vorgesehen ist, sind wegen der dadurch auftretenden Verwirbelungen (turbulente Strömung) mit der bekannten Vorrichtung keine reproduzierbaren Messwerte erhältlich. Überdies ist in der GB-A-612,766 nicht geoffenbart, wie das Durchflussmengenmessgerät angeschlossen werden soll, zumal die hiezu in der GB-A-612,766 erwähnte Kupplung ("a coupling device") weder näher beschrieben noch dargestellt ist.

Der Erfindung liegt die Aufgabe zu Grunde, die aus der AT 008 892 U1 bekannte Anordnung zu verbessern, insbesondere um reproduzierbare Werte beim Messen der Parameter von Hydranten zu erhalten.

Gelöst wird diese Aufgabe erfindungsgemäß mit einer Anordnung, welche die Merkmale von Anspruch 1 aufweist.

Bevorzugte und vorteilhafte Ausgestaltungen der Erfindung sind Gegenstand der Unteransprüche.

Da bei der erfindungsgemäßen Anordnung der Hydrant mit den Messgeräten durch eine starre Verbindung, insbesondere ein starres Rohr, verbunden ist, ergibt sich eine Beruhigung der Strömung von Wasser aus dem Hydranten zu den Messgeräten, so dass für die Parameter des zu messenden Hydranten genaue Werte, insbesondere reproduzierbare Werte, erhalten werden.

Mit Vorteil kann im Rahmen der Erfindung vorgesehen sein, dass nicht nur vor sondern auch nach den Messgeräten eine starre Rohrleitung vorgesehen ist. Es wird bei dieser Ausführungsform der erfindungsgemäßen Anordnung vor und auch nach dem Messgerät eine Beruhigungsstrecke geschaffen, die für das Erstellen genauer und reproduzierbarer Messergebnisse vorteilhaft ist.

In einer bevorzugten Ausführungsform der Erfindung ist in dem starren Rohr vor dem Messgerät ein Drucksensor vorgesehen.

In einer weiteren Ausführungsform der Erfindung ist vorgesehen, dass ein Ventil für die Druckregelung im Bereich einer nach dem Messgerät vorgesehenen starren Rohrleitung angeordnet ist.

In einer Ausführungsform der Erfindung ist vorgesehen, dass die Mündung des einströmseitigen Rohres tiefer liegt als die Mündung des ausströmseitigen Rohres. Dies hat den vorteilhaften Effekt, dass die Anordnung beim Messvorgang luftfrei (keine Luftblasen oder Lufttaschen) ist, so dass die Ergebnisse der Prüfung genau und gut reproduzierbar sind. Diese Anordnung (Rohr einströmseitig tiefer als auströmseitig) kann in einer Ausführungsform erreicht werden, indem die Mündung des einströmseitigen Rohres am Ende eines 90°-Rohrbogens angeordnet ist und nach unten weist und/oder die Mündung des ausströmseitigen Rohres am Ende eines 90°-Rohrbogens angeordnet ist und nach oben weist.

In einer anderen Ausführungsform der Erfindung ergibt sich dies (Entlüftungseffekt), wenn die starre Rohrleitung vor und gegebenenfalls auch die starre Rohrleitung nach den Messgeräten zur Horizontalen unter einem spitzen Winkel geneigt ist, wobei ein Winkel in der Größenordnung von 30° zur Horizontalen bevorzugt ist. Bevorzugt ist dabei, dass die Rohrleitung bzw. die Rohrleitungen in Strömungsrichtung ansteigend ausgerichtet sind.

An den Enden der Rohrleitungen vor und/oder nach dem Messgerät können Anschlusskupplungen für weitere Geräte vorgesehen sein. Insbesondere kann über die Anschlusskupplung vor dem Messgerät eine Verbindung mit einem Hydranten hergestellt werden, wobei diese Verbindung ohne weiteres als Schlauch ausgebildet sein kann, da durch die starre Rohrleitung vor dem Messgerät eine Beruhigungsstrecke gebildet ist.

An die Anschlusskupplung des Rohres nach dem Messgerät kann ein Schlauch zum Ableiten von Wasser in einen Kanal oder dergleichen angeschlossen werden.

Durch die durch die starren Rohrleitungen (Stahlrohre) gebildete Beruhigungsstrecke vor dem Messgerät und verbessert durch eine Beruhigungsstrecke nach dem Messgerät in Form eines steifen Rohres (Stahlrohr) werden insbesondere gut reproduzierbare Werte für den Ruhedruck, für den Fließdruck und für die Durchflussmenge (in: m³/h, l/min oder l/sec) erreicht.

Um mit der erfindungsgemäßen Anordnung auch den Einfluss der Wasserentnahme aus dem überprüften Hydranten auf andere im selben Wasserleitungsnetz vorhandene Hydranten zu ermitteln, kann im Rahmen der Erfindung wenigstens ein weiteres Druckmessgerät vorgesehen sein, das an wenigstens einem weiteren, im selben Wasserleitungsnetz vorgesehenen Hydranten anzuschließen ist. Bevorzugt liefert dieses wenigstens eine weitere Druckmessgerät seine Daten an den Rechner der Anordnung, mit welcher der Hydrant geprüft wird. Dieses Übermitteln der Druckdaten von wenigstens einem, aber bis zu beispielsweise zehn weiteren Hydranten zugeordneten Druckmessgerät ("Drucklogger") kann durch Auslesen der Druckdaten nach der Prüfung des Hydranten, durch Übermitteln während der Prüfung des Hydranten mittels Funk oder SMS mit Hilfe eines Mobilfunknetzes erfolgen.

Die bei dem wenigstens einem weiteren Hydranten erfassten Werte für den (Ruhe-) Druck des Wassers können auch direkt in dem Messgerät, also stationär, aufgezeichnet und später zur Auswertung dem zentralen Rechner eingegeben werden.

So kann mit der Erfindung nicht nur ein Hydrant geprüft werden, sondern es kann zusätzlich - wenn gewünscht oder gefordert - eine Leitungsnetzberechnung oder Leitungsnetzprüfung oder auch eine Simulation der Entnahme von (Lösch-)Wasser an mehreren Stellen eines Wasserleitungsnetzes ausgeführt werden. Auf diese Weise kann mit Hilfe der erfindungsgemäßen Anordnung auch ein für Feuerwehren sehr wichtiger Löschwasserplan erstellt werden. Solche Löschwasserpläne können in digitalen Landkarten oder Satellitenbilder ("Google-Earth") oder in ein geografisches Informationssystem ("GIS") integriert werden.

Die erfindungsgemäße Anordnung kann auch durch Bilderfassung des geprüften Hydranten oder der geprüften Hydranten ergänzt sein. Bei dieser Ausführungsform werden die Daten der z.B. mit Hilfe von (Digital-)Kameras angefertigten Bilder so wie dies oben für die Druckdaten erläutert wurde übermittelt, um im zentralen Messgerät verwertet zu werden. Mit Vorteil können die bei dem wenigstens einen weiteren Hydranten erfassten Daten ebenso wie Bilder des (weiteren) Hydranten und/oder seiner Umgebung in einem vorgegebenen Zeitfenster der zentralen Auswertung zugeführt werden, damit sie dem (weiteren) Hydranten zugeordnet werden können.

In einer weiteren Ausführungsform ist die erfindungsgemäße Anordnung mit einem GPS-System versehen.

Weitere Einzelheiten und Merkmale der Erfindung ergeben sich aus der nachstehenden Beschreibung von bevorzugten Ausführungsbeispielen, die in den Zeichnungen dargestellt sind.

Es zeigt:
- Fig. 1: schematisch eine erfindungsgemäße Anordnung,
- Fig. 2: in einem Schaubild für das Benutzen der erfindungsgemäßen Anordnung und
- Fig. 3: die Verwendung zusätzlicher Druckmessgeräte.

In einer beidseitig mit Anschlusskupplungen 1, 3 ausgestatteten starren Rohrleitung 5, die beispielsweise ein Stahlrohr ist, ist an einem Ende eine Anschlusskupplung 3 vorgesehen, über welche die erfindungsgemäße Anordnung über eine Leitung, beispielsweise einen Schlauch, mit dem Ausgang eines Hydranten, dessen Parameter zu messen sind, verbunden werden kann. Im Bereich der einströmseitigen Rohrleitung 7 ist ein Drucksensor 9 vorgesehen, der den Druck in der Rohrleitung 5 erfasst.

Am Ende der einströmseitigen Rohrleitung 7 ist ein Zähler 11 vorgesehen, in dem ein Durchflussmengenmessgerät angeordnet ist, das, ebenso wie der Drucksensor 9 im Anschluss an die einlaufseitige Anschlusskupplung 1, an einen der Anordnung zugeordneten Rechner mit Bildschirm (nicht gezeigt) zur Datenerfassung angeschlossen sein kann. Ausgangseitig des Zählers 11 ist ebenfalls eine starre Rohrleitung 13 vorgesehen, in der mit geringem Abstand von einer ausströmseitigen Anschlusskupplung 3 ein Absperr- bzw. Regelorgan, z.B. ein Ventil 15 für die Druckregelung vorgesehen ist.

Wasser aus dem Hydranten, dessen Parameter zu erfassen sind, strömt in der durch den Pfeil 17 angedeuteten Strömungsrichtung von der einströmseitigen Anschlusskupplung 1 zur ausströmseitigen Anschlusskupplung 3.

Durch die Rohrleitung 5, insbesondere deren gerade Abschnitte 7 und 13, die ohne Umlenkungen (Krümmer, Winkelstücke, Bögen oder ähnliches) in den Zähler 11 münden bzw. von diesem ausgehen, werden vor dem Zähler 11 und nach dem Zähler 11 Beruhigungsstrecken gebildet, so dass reproduzierbare Werte nicht nur für die Mengenmessung (Zähler 11) sondern auch für die Druckmessung (Ruhedruck und Fließdruck, Drucksensor 9) erreicht werden.

Wie aus der Zeichnung ersichtlich, sind die Rohrleitungen 7 und 13 vor und nach dem Zähler 11 unter einem spitzen Winkel (0° bis 90°, beispielsweise 30°) zur Horizontalen ausgerichtet. Dies kann beispielsweise dadurch erreicht werden, dass die erfindungsgemäße Anordnung in einem Fahrzeug, das auch ein Anhänger sein kann, mit dieser Winkelausrichtung montiert ist.

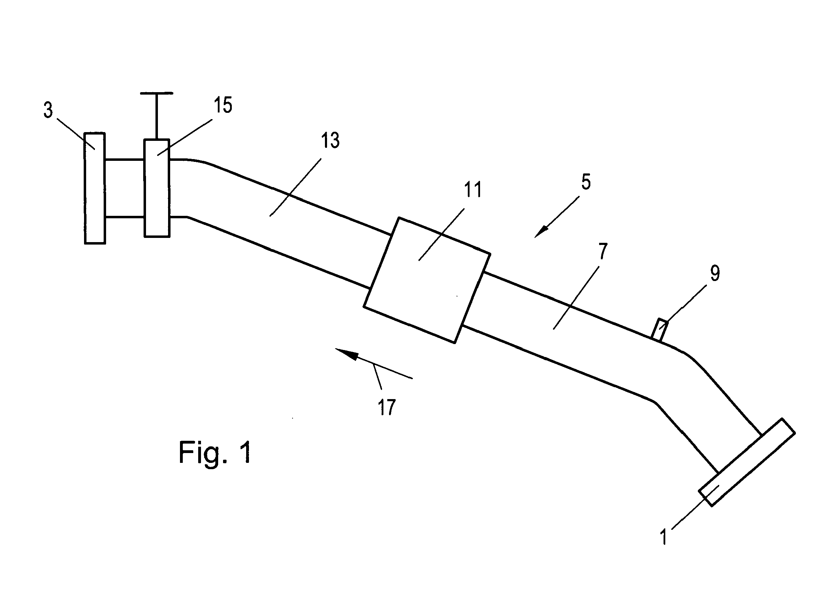

Die Endbereiche der Rohrleitungen 7 und 13 können abgewinkelt sein, wie dies in Fig. 1 dargestellt ist.

Um die erfindungsgemäße Anordnung zu benützen, wird sie über einen Schlauch, der an die Anschlusskupplung 1 angeschlossen ist, mit einem Hydranten (nicht gezeigt) verbunden. An die auslassseitige Anschlusskupplung 3 kann ein Schlauch angeschlossen werden, durch den Wasser aus dem Hydranten, nach dem es das Druckmessgerät 9 und das Durchflussmengenmessgerät im Zähler 11 durchströmt hat, abströmt.

Beim Arbeiten mit der erfindungsgemäßen Vorrichtung kann beispielsweise wie folgt vorgegangen werden:
Zunächst werden Name und Anschrift des Auftraggebers der Überprüfung des Hydranten sowie die Daten des Hydranten, wie Hydrantennummer, Hydrantentype, Hydrantenmarke, die Konstruktion und der Zustand des Hydranten, insbesondere die Zahl der Ausgänge, sowie der Zeitpunkt der Überprüfung des Hydranten erfasst und beispielweise in das Messgerät über eine Eingabetastatur eingegeben.

Sofern es sich nicht um die erste Messung bzw. Prüfung des Hydranten handelt, können auch die Ergebnisse der letzten Überprüfung, und/oder die Daten der letzten Überprüfung des Hydranten in das Prüfprotokoll übernommen oder aufgenommen werden.

Zunächst wird der Ruhedruck, also der Druck im Wasser gemessen, wenn aus dem Hydranten kein Wasser austritt (geschlossenes Ventil 15). Schließlich wird der Druck im aus dem Hydranten austretenden Wasser gemessen. Die Ergebnisse der Druckmessungen werden bevorzugt in einem Diagramm wiedergegeben. Es ist so, dass der Ruhedruck nach dem Öffnen des Absperrorgans (des Ventils 15) langsam abfällt und dann in der Höhe des Ausfließdruckes konstant bleibt.

Dann wird die Leistungsfähigkeit des Hydranten erfasst, indem die bei geöffnetem Absperrorgan (Schieber) des Hydranten und geöffnetem Ventil 15 je Zeiteinheit austretende Wassermenge ("Durchflussmenge" z.B. in m³/h) gemessen wird. Diese Messung wird mit Hilfe eines geeichten Durchflussmengenmessgerätes im Zähler 11 ausgeführt. Das Ergebnis dieser Messung wird beispielsweise m³/h, in l/min oder in l/sec angegeben, und ein entsprechendes Diagramm erstellt und dem Protokoll angeschlossen.

Das zuvor für den Druck gesagte gilt sinngemäß auch für die Leistungsfähigkeit des Hydranten, wobei beim Öffnen des Absperrorgans 15 die je Zeiteinheit aus dem Hydranten ausfließende Menge an Wasser ansteigt, eine Zeitlang mit höherem Pegel im wesentlichen konstant bleibt und dann auf einen ebenfalls im wesentlichen konstant bleibenden Wert absinkt. Dieser Wert der Leistungsfähigkeit des Hydranten ist der für die Benützung des Hydranten, beispielsweise durch Feuerwehren u.dgl., relevante Wert, da er der über längere Zeit gleichbleibende Leistungsfähigkeit des Hydranten entspricht.

Des Weiteren kann mit Hilfe eines speziellen mit einem Drucksensor (Piezo-Sensor) ausgestattetem Schlüssels beim Öffnen des Hydranten der zum Öffnen des Absperrorgans im Hydranten erforderliche Kraftaufwand bestimmt werden.

Der Verlauf der beim Öffnen/Schließen des Absperrorgans des Hydranten aufzuwendenden Kraft kann ebenfalls in einem Diagramm wiedergegeben werden, in dem die Kraft gegen die (Winkel-) Bewegungen des Betätigungsorgans für den Absperrschieber (Schlüssel) aufgetragen ist.

In das Prüfprotokoll werden bevorzugt auch die Daten der Rohrleitungen, insbesondere der DN (Durchmesser), das Material des Rohres, und der verwendete Hydrantenanschluss durch seinen Durchmesser DN identifiziert.

Das Ergebnis der Prüfung wird in dem Prüfprotokoll wiedergegeben, in das nicht nur die GPS-Daten (geografische Koordinaten) des Hydranten und die Uhrzeit der Messung, sondern auch eine Beurteilung des Zustandes des Hydranten, die Zugänglichkeit des Hydranten, das Hydrantenschild und die Betätigbarkeit des Hydrantenschiebers, aufgenommen werden können. Schließlich können noch allgemeine Bemerkungen über den Zustand des Hydranten und/oder Bilder des Hydranten in das Prüfprotokoll aufgenommen werden.

Überdies können im Prüfprotokoll die Daten der verwendeten Messgeräte (Drucksensor 9 und Durchflussmengenmessgerät 11) aufgenommen werden. Die Folgen von Tätigkeiten beim Erfassen der Parameter eines Hydranten werden der die Bestimmung ausführenden Person bevorzugt in dem an das Messgerät 11 angeschlossenem Rechner auf Grund eines in diesem eingespeicherten Programms vorgegeben.

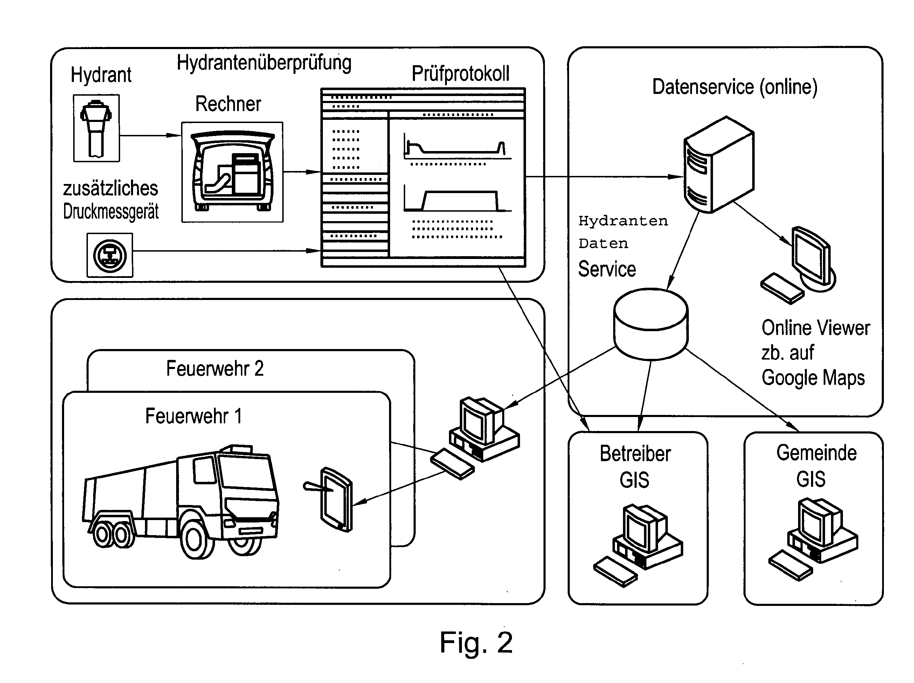

Fig. 2 zeigt in einem Schaubild das Arbeiten mit der erfindungsgemäßen Anordnung. Die von der erfindungsgemäßen Anordnung, wie oben beschrieben, erfassten Daten werden dem Rechner ("Messgerät") zugeleitet.

Der Rechner erstellt das Prüfprotokoll und gibt diese an das Datenservice des Betreibers und/oder einem GIS des Betreibers oder an das Hydrantenprüfgerät weiter. Zusätzlich werden die Daten des geprüften Hydranten (das "Prüfungsprotokoll") an eine oder mehrere der nachstehend genannten Stellen geliefert:
- Hydranten Daten Service
- Online Viewer (Google Maps)
   Vom Hydranten Daten Service können GIS-Daten (private und/oder solche von Gemeinden) und/oder an andere Nutzer, wie Feuerwehren, geliefert werden.

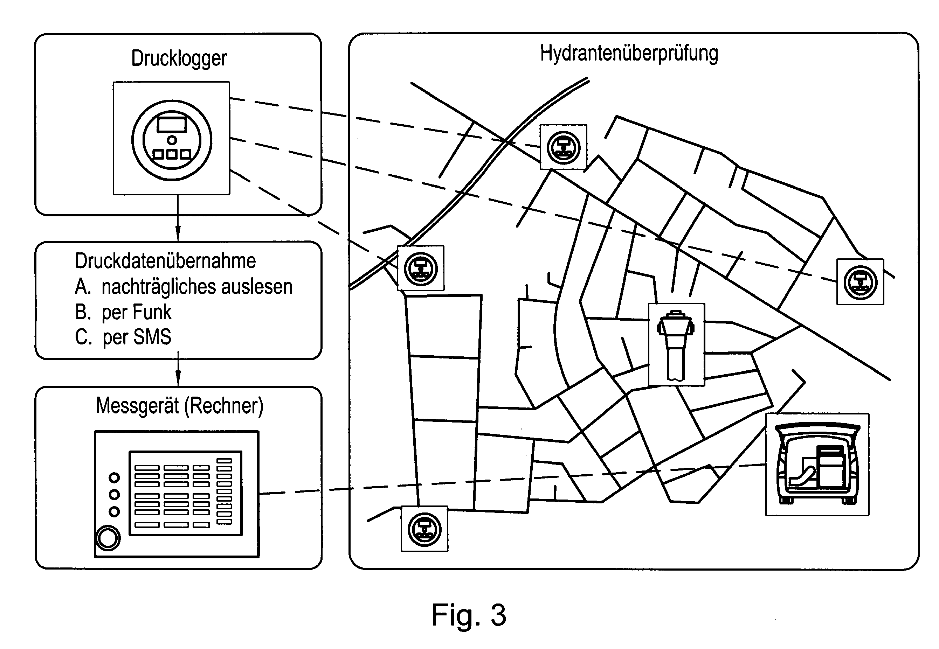

   Fig. 3 zeigt wie mit Hilfe zusätzlicher Druckmessgeräte ("Drucklogger") während der Prüfung eines Hydranten weitere Hydranten erfasst werden können, wie dies nachstehend erläutert wird.
   Um mit der erfindungsgemäßen Anordnung auch den Einfluss der Wasserentnahme aus dem überprüften Hydranten auf andere im selben Wasserleitungsnetz vorhandene Hydranten zu ermitteln, kann im Rahmen der Erfindung wenigstens ein weiteres Druckmessgerät vorgesehen sein, das an wenigstens einen weiteren, im selben Wasserleitungsnetz vorgesehenen Hydranten anzuschließen ist (siehe Fig. 3). Bevorzugt liefert dieses wenigstens eine weitere Druckmessgerät seine Daten an den Rechner der erfindungsgemäßen Anordnung, mit welcher der Hydrant geprüft wird. Dieses Übermitteln der Druckdaten von wenigstens einem, aber bis zu beispielsweise zehn weiteren Hydranten kann durch Auslesen der Druckdaten nach der Prüfung des Hydranten, durch Übermitteln während der Prüfung des Hydranten mittels Funk oder SMS mit Hilfe eines Mobilfunknetzes erfolgen. Die bei dem wenigstens einen weiteren Hydranten erfassten Daten können auch (manuell) ausgelesen und über ein Zeitfenster im (zentralen) Rechner dem überprüften Hydranten zugeordnet werden.
   So kann mit der Erfindung nicht nur ein Hydrant geprüft werden, sondern es kann zusätzlich - wenn gewünscht oder gefordert - eine Rohrnetzberechnung oder Löschwasserberechnung oder auch eine Simulation der Entnahme von (Lösch-)Wasser an mehreren Stellen eines Wasserleitungsnetzes berechnet werden. Auf diese Weise kann mit Hilfe der erfindungsgemäßen Anordnung auch ein für Feuerwehren sehr wichtiger Löschwasserplan erstellt werden. Solche Löschwasserpläne können in digitale Landkarten oder Satellitenbilder ("Googel-Earth") oder ein GIS integriert werden. So ist es beispielsweise möglich in einem digitalen Stadtplan jedem Gebäude für die Feuerwehr - im Brandfall - relevante Informationen ("Attribute") zuzuordnen, die z.B. durch "Anklicken" des Gebäudes auf einem GPS-Navigationsgerät abrufbar sind.
   In solchen Plänen ("Löschwasserpläne") können Planzeichen mit örtlichen Einsatzinformationen eingefügt sein. Solche Planzeichnungen können Symbole für folgendes sein:

Planzeichen für Einsatzinformationen
   - Standort des Gerätehauses
   - BMZ - Brandmeldezentrale
   - Überflurhydrant (Leistung l/Min)
   - Unterflurhydrant (Leistung l/Min)
   - Überflurhydrant an Ringleitung (Leistung l/Min)
   - Saugstelle am Bach
   - Saugstelle oder Löschwasserbehälter, mit Angabe der möglichen Wasserentnahme
   - Standplatz der Pumpe (TS) mit Standplatznummer
   - Steigleitung
   - Durchfahrtshöhe mit Höhenangabe
   - Gewichtslimit mit Angabe
   - Hubschrauberlandeplatz für Löscheinsatz
Planzeichen für Gefahrenstellen
   - Gefahr durch radioaktive Stoffe
   - Gefahr durch Strom
   - Explosionsgefahr
   - Gefahr durch Gas
   - Gefahr durch Löschen mit Wasser
   - Erhöhte Brandgefahr
   - Gefahr durch Chemikalien
Planzeichen für adressbezogene Daten
   - Gebäude mit Gasanschluss
   - Allgemeine Information zur Adresse
Straßen
   - Straßenbezeichnung und -kilometrierung (Nummer des Hydranten)

Die erfindungsgemäße Anordnung kann auch durch Bilderfassung des geprüften Hydranten oder der geprüften Hydranten ergänzt sein. Bei dieser Ausführungsform werden die Daten der z.B. mit Hilfe von (Digital-)Kameras angefertigten Bilder, so wie dies oben für die Druckdaten erläutert wurde, übermittelt, um im zentralen Messgerät verwertet zu werden.

In einer weiteren Ausführungsform ist die erfindungsgemäße Anordnung mit einem GPS-System versehen.

Beim Prüfen von Hydranten kann aus diesen entnommenes Wasser in das Wasserversorgungsnetz zurückgeleitet werden.

Zusammenfassend kann ein Ausführungsbeispiel der Erfindung wie folgt beschrieben werden:
Um die Parameter eines für die Wasserabgabe dienenden Hydranten zu erfassen, wird mit Hilfe von Messgeräten 9, 11 wenigstens der Ruhedruck (Druck im Wasser ohne Entnahme von Wasser aus dem Hydranten), der Fließdruck (Druck im aus dem Hydranten ausfließenden Wasser) und die Leistungsfähigkeit des Hydranten (maximal abgebbare Wassermenge je Zeiteinheit) erfasst. Hierzu sind Messgeräte 9, 11 vorgesehen, die in einer in Strömungsrichtung (Pfeil 17) schräg ansteigenden Rohrleitung 5, 7, 13 aus starren Rohren vorgesehen sind, wobei einströmseitig mit Abstand vor dem Mengenzähler 11 ein Drucksensor 9 und in Strömungsrichtung gesehen nach dem Zähler 11 im starren Rohr ein Ventil 15 für die Druckregulierung vorgesehen sind. Durch die starren Rohrleitungen 5, 7, 13 vor und nach dem Zähler 11 ergeben sich Beruhigungsstrecken, so dass reproduzierbare Werte für die Parameter des Hydranten erfasst werden können.

## Patentansprüche

1. Anordnung zum Prüfen von Hydranten und ähnlichen Wasserentnahmevorrichtungen mit einem an den Ausgang eines Hydranten anzuschließenden Druckmessgerät (9) mit einem dem Druckmessgerät nachgeordneten Absperrorgan (15) und mit einem Durchflussmengenmessgerät (11) sowie mit Auslauf (3) für das Wasser, **dadurch gekennzeichnet, dass** das Durchflussmengenmessgerät (11) einströmseitig mit einem starren Rohr (7) als Zuleitung verbunden ist.

2. Anordnung nach Anspruch 1, **dadurch gekennzeichnet, dass** das Durchflussmengenmessgerät (11) ausströmseitig mit einem starren Rohr (13) verbunden ist.

3. Anordnung nach Anspruch 1 oder 2, **dadurch gekennzeichnet, dass** die Mündung (1) des einströmseitigen Rohres (7) tiefer liegt als die Mündung (3) des ausströmseitigen Rohres (13).

4. Anordnung nach Anspruch einem der Ansprüche 1 bis 3, **dadurch gekennzeichnet, dass** das einströmseitige starre Rohr (7) zur Horizontalen in einem spitzen Winkel geneigt ist.

5. Anordnung nach einem der Ansprüche 1 bis 4, **dadurch gekennzeichnet, dass** das ausströmseitig angeordnete starre Rohr (15) zur Horizontalen unter einem spitzen Winkel geneigt ist.

6. Anordnung nach einem der Ansprüche 4 oder 5, **dadurch gekennzeichnet, dass** der spitze Winkel 0° bis 90° beträgt und vorzugsweise in der Größenordnung von 30° liegt.

7. Anordnung nach einem der Ansprüche 1 bis 3, **dadurch gekennzeichnet, dass** die Mündung (1) des einströmseitigen Rohres (7) am Ende eines Rohrbogens, insbesondere eines Rohrbogens über 90°, angeordnet ist und nach unten weist.

8. Anordnung nach einem der Ansprüche 1 bis 3 oder 7, **dadurch gekennzeichnet, dass** die Mündung (3) des ausströmseitigen Rohres (13) am Ende eines Rohrbogens, insbesondere eines Rohrbogens über 90°, angeordnet ist und nach oben weist.

9. Anordnung nach Anspruch 7 und 8, **dadurch gekennzeichnet, dass** das einströmseitige Rohr (7) und das ausströmseitige Rohr (13) in Gebrauchslage unwesentlich horizontal eingerichtet sind.

10. Anordnung nach einem der Ansprüche 1 bis 9, **dadurch gekennzeichnet, dass** der Drucksensor (9) in der starren einströmseitigen Rohrleitung (7) vor dem Durchflussmengenmessgerät (11) angeordnet ist.

11. Anordnung nach einem der Ansprüche 1 bis 10, **dadurch gekennzeichnet, dass** das Absperrorgan bzw. Ventil (15) für die Druckregulierung in der starren ausströmseitigen Rohrleitung (13) nach dem Durchflussmengenmessgerät (11) vorgesehen ist.

12. Anordnung nach einem der Ansprüche 1 bis 11, **dadurch gekennzeichnet, dass** die Rohre (7, 13) vor und nach dem Zähler (11) miteinander fluchtend angeordnet sind und gerade in den Zähler (11) münden bzw. von diesem aus ausgehen.

13. Anordnung nach einem der Ansprüche 1 bis 12, **dadurch gekennzeichnet, dass** an der einströmseitigen Rohrleitung (7) eine Anschlusskupplung (1) für die Verbindung der Anordnung mit einem Hydranten vorgesehen ist.

14. Anordnung nach einem der Ansprüche 1 bis 13, **dadurch gekennzeichnet, dass** am Ende der ausströmseitigen Rohrleitung (13) eine Anschlusskupplung (3) für den Anschluss eines Ableitungsschlauches vorgesehen ist.

15. Anordnung nach einem der Ansprüche 1 bis 14, **dadurch gekennzeichnet, dass** die Rohrleitungen (5, 7, 13) in Strömungsrichtung (Pfeil 17) ansteigend ausgerichtet sind.

16. Anordnung nach einem der Ansprüche 1 bis 15, **dadurch gekennzeichnet, dass** die einströmseitige Rohrleitung (7) im Bereich der Anschlusskupplung (1) nach unten abgewinkelt ist.

17. Anordnung nach einem der Ansprüche 1 bis 16, **dadurch gekennzeichnet, dass** die ausströmseitige Rohrleitung (13) im Bereich der ausströmseitigen Anschlusskupplung (3) in die Horizontale abgewinkelt ist.

18. Anordnung nach Anspruch 17, **dadurch gekennzeichnet, dass** das Ventil (15) für die Druckregelung im horizontalen Abschnitt der ausströmseitigen starren Rohrleitung (13) vorgesehen ist.

19. Anordnung nach einem der Ansprüche 1 bis 18, **dadurch gekennzeichnet, dass** zusätzliche Druckmessgeräte, die an weitere im selben Leitungsnetz wie der geprüfte Hydrant vorgesehen sind, anschließbar sind.

20. Anordnung nach Anspruch 19, **dadurch gekennzeichnet, dass** die von den zusätzlichen Druckmessgeräten erfassten Druck-Daten an den Rechner der Anordnung gesendet werden.
